Europäisches Patentamt

European Patent Office

Office européen des brevets

(11) Veröffentlichungsnummer : **0 140 209**
B1

# (12) EUROPÄISCHE PATENTSCHRIFT

(45) Veröffentlichungstag der Patentschrift :
27.05.87

(51) Int. Cl.⁴ : **H 02 H 7/04, H 02 H 9/04**

(21) Anmeldenummer : **84111926.6**

(22) Anmeldetag : **05.10.84**

(54) **Stufentransformator mit nicht starr geerdetem Sternpunkt.**

(30) Priorität : 14.10.83 DE 3337373

(43) Veröffentlichungstag der Anmeldung :
**08.05.85 Patentblatt 85/19**

(45) Bekanntmachung des Hinweises auf die Patenterteilung : **27.05.87 Patentblatt 87/22**

(84) Benannte Vertragsstaaten :
**AT FR SE**

(56) Entgegenhaltungen :
**CH-A- 338 523**
**DE-A- 2 357 209**
**DE-A- 2 421 728**
**F. ANDE: "BETRIEB UND ANWENDUNG VON LEIS-**
**TUNGS-UND REGELTRANSFORMATOREN", 1954,**
**SPRINGER-VERLAG (DE), S. 127, 128, 202**

(73) Patentinhaber : **Maschinenfabrik Reinhausen Gebrü-**
**der Scheubeck GmbH & Co. KG.**
**Falkensteinstrasse 8 Postfach 120360**
**D-8400 Regensburg (DE)**

(72) Erfinder : **Breuer, Wolfgang, Dipl.-Ing.**
**Utastrasse 20 d**
**D-8400 Regensburg (DE)**

## Beschreibung

Die Erfindung bezieht sich auf einen Stufentransformator gemäß Oberbegriff des Patentanspruches 1. Derartige Stufentransformatoren sind bekannt : F. Andé « Betrieb und Anwendung von Leistungs- und Regeltransformatoren » 1954, Springer-Verlag (DE), Seiten 127, 128, 202. Die Schwierigkeit bei diesen Stufentransformatoren besteht in der räumlichen Anordnung des Überspannungsableiters. Wegen des sehr begrenzten Raumes im Transformator selbst und auch wegen einer gewissen Störanfälligkeit von Überspannungsableitern ist es üblich, den im Stufentransformator gebildeten Sternpunkt mittels einer elektrischen Leitung und einer Durchführung aus dem Transformator hinauszuführen und den Überspannungsleiter außerhalb des Transformators, z. B. als Freiluftüberspannungsableiter, anzuordnen. Dies ist eine sehr aufwendige Lösung.

Aufgabe der Erfindung ist es, eine weniger aufwendige und trotzdem wartungssichere Lösung für die Ausführung des Überspannungsableiters bei einem Stufentransformator gemäß Oberbegriff des Patentanspruches 1 anzugeben. Diese Aufgabe wird erfindungsgemäß durch die im Kennzeichen des Patentanspruches 1 angegebenen Mittel gelöst.

Die mit der Erfindung erzielten Vorteile sind folgende : Es ist nicht mehr erforderlich, den Sternpunkt aus dem Stufentransformator hinauszuführen, die entsprechenden Leitungen und vor allem die dafür erforderliche Durchführung entfallen. Bei kleinster Raumbeanspruchung liegt eine sichere Unterbringung des als spannungsabhängigen Widerstand ausgeführten Überspannungsableiters vor. Der spannungsabhängige Widerstand ist ohne größere Schwierigkeiten zugänglich und kann bei den für den Stufenschalter erforderlichen Wartungsarbeiten kontrolliert werden.

Zwar ist es bekannt, aus Zinkoxyd bestehende spannungs- abhängige Widerstände im Transformator selbst oder auch im Ölgefäß eines Lastumschalters eines Stufenschalters anzuordnen. Jedoch erfolgt hier die Verwendung allein als Überspannungsschutz von Wicklungsteilen, und der im Lastumschalter angeordnete spannungsabhängige Widerstand ist im Bereich des Kontaktsystems des Lastumschalters so angeordnet und geschaltet, daß er als Überspannungsschutz zwischen gewählter und vorgewählter Anzapfstufe wirkt (DE-B-23 57 209). Demgegenüber bezweckt die Erfindung eine vorteilhafte Ausführung des Überspannungsschutzes für den nicht starr geerdeten Sternpunkt des Stufentransformators.

In besonders vorteilhafter Weise wird der spannungsabhängige Widerstand aus mehreren parallel zur Achse des Isolierzylinders angeordneten Stapeln aus Zinkoxydtabletten, die in speziellen Isolierstoffröhren mittels Federkraft zusammengepreßt werden, hergestellt.

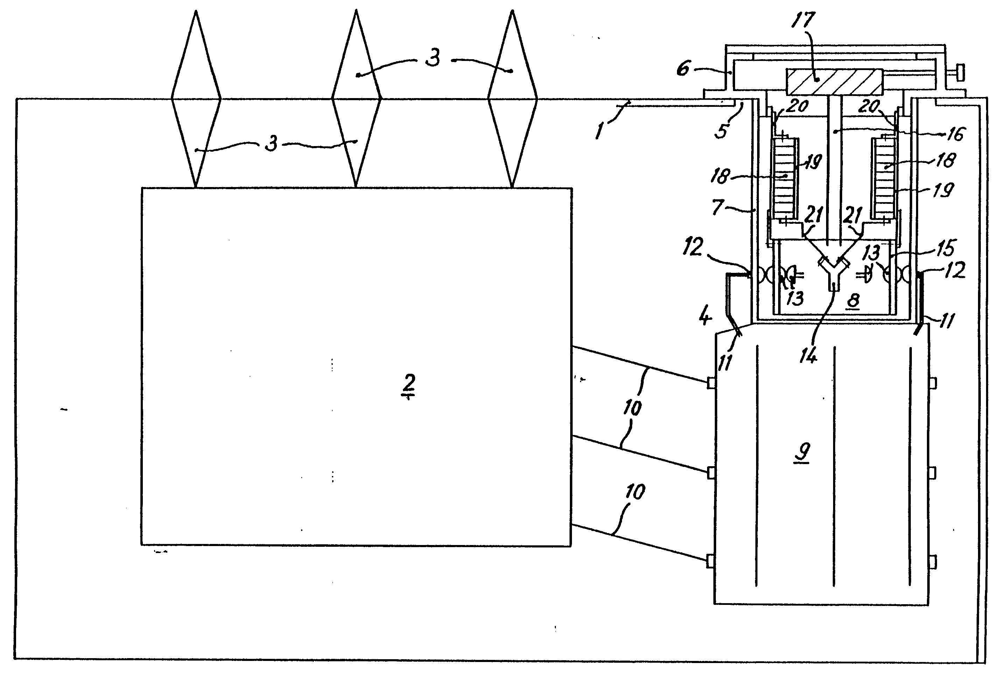

Ein Ausführungsbeispiel der Erfindung ist in der Zeichnung dargestellt und wird im folgenden näher beschrieben :

Der Stufentransformator besteht im wesentlichen aus einem Gehäuse 1 mit dem darin untergebrachten Wicklungsteil 2, dessen Zuleitungen über Durchführungen 3 angeschlossen sind, und aus einem versenkt im Gehäuse 1 untergebrachten Sternpunkt-Stufenschalter 4.

Der Stufenschalter 4 besteht aus einem auf den Flansch einer Öffnung 5 im Gehäuse 1 aufgesetzten Stufenschalterkopf 6, aus einem in einem zylindrischen Ölgefäß 7 angeordneten Lastumschalter 8 und aus einem Stufenwähler 9. Die vom Wicklungsteil 2 des Transformators zum Stufenwähler 9 führenden Verbindungsleitungen 10 sind lediglich schematisch dargestellt, desgleichen die vom Stufenwähler 9 zum Lastumschalter 8 führenden Verbindungsleitungen 11. Die zuletzt genannten Verbindungsleitungen 11 führen zu äußeren Anschlußkontakten 12 des Lastumschalters 8, die mit inneren Schaltkontakten 13 zusammenwirken. Die inneren Schaltkontakte 13 bilden auf übliche Weise den Sternpunkt 14 des Stufentransformators, was im einzelnen nicht näher dargestellt ist. Die feststehenden und beweglichen inneren Schaltkontakte 13 sind in einem eigenen Gehäuse 15, das im unteren Teil des zylindrischen Ölgefäßes 7 sitzt, zusammengefaßt. Die beweglichen Kontakte werden mittels einer Schaltwelle 16, die über ein im Stufenschalterkopf 6 sitzendes Getriebe 17 betätigt wird, angetrieben. Die im wesentlichen aus Isolierstoff bestehende Schaltwelle 16 überbrückt dabei die zwischen den Kontakten 12, 13 und dem Stufenschalterkopf 6 vorliegende Isolationsstrecke.

Parallel zur Schaltwelle 16 sind zwei spannungsabhängige Widerstände 18 angeordnet, deren obere Enden mittels einer elektrischen Leitung 20 mit dem Stufenschalterkopf 6, also mit Erdpotential, und deren untere Enden mittels einer weiteren Leitung 21 mit dem Sternpunkt 14 des Lastumschalters verbunden sind. Die spannungsabhängigen Widerstände 18 bestehen jeweils aus einer Vielzahl von Zinkoxydtabletten, die in je einem speziellen Isolierrohr 19 eingestapelt und dort zusammengepreßt sind. Die Isolierstoffröhren 19 mit den eingestapelten Zinkoxydtabletten werden vom Gehäuse 15 des Lastumschalters 8 getragen und können somit bei Inspektion des Lastumschalters 8 aus dem zylindrischen Ölgefäß 7 herausgenommen werden.

## Patentansprüche

1. Stufentransformator mit nicht starr geerdetem Sternpunkt, wobei zwischen Sternpunkt und Erdpotential ein Überspannungsableiter geschaltet ist, und mit einem im Gehäuse (1) des Transformators versenkt angeordnetem Sternpunkt-Stufenschalter (4), dessen auf Erdpotential liegender Stufenschalterkopf (6) einen Isolierzylinder (7) als Teil eines den Lastumschalter (8) aufnehmenden Ölgefäßes trägt, wobei der Lastumschalter (8) unter Einhaltung des erforderlichen Isolationsabstandes zum Stufenschalterkopf (6) im unteren Teil des Ölgefäßes sitzt, dadurch gekennzeichnet, daß innerhalb des Isolierzylinders (7) zwischen Lastumschalter (8) und Stufenschalterkopf (6) ein spannungsabhängiger Widerstand (18) angeordnet ist, der elektrisch einerseits mit dem Stufenschalterkopf (6) und andererseits mit dem Sternpunktkontakten (14) des Lastumschalters (8) verbunden ist.

2. Stufentransformator nach Anspruch 1, dadurch gekennzeichnet, daß der spannungsabhängige Widerstand (18) aus mehreren parallel zur Achse (16) des Isolierzylinders (7) angeordneten in Isolierstoffrohren (19) zusammengepreßten Stapeln aus Zinkoxydtabletten besteht.

## Claims

1. Tapped transformer with a star point that is not earthed rigidly, wherein a surge arrester is connected between star point and earth potential,· and with a star point tap selector switch (4), which is arranged recessed in the housing (1) of the transformer and the tap selector switch head (6) of which lies at earth potential and carries an insulating cylinder (7) as part of an oil vessel receiving the load diverter switch (8), wherein the load diverter switch (8) sits in the lower part of the oil vessel while maintaining the requisite insulation spacing from the tap selector switch head (6), characterised thereby, that a voltage-dependent resistor (18), which is electrically connected on the one hand with the tap selector switch head (6) and on the other hand with the star point contacts (14) of the load diverter switch (8), is arranged between the load diverter switch (8) and the tap selector switch head (6) within the insulating cylinder (7).

2. Tapped transformer according to claim 1, characterised thereby, that the voltage-dependent resistor (18) consists of several stacks, compressed in insulating material tubes (19) and arranged parallelly to the axis (16) of the insulating cylinder (7), of zinc oxide tablets.

## Revendications

1. Transformateur à échelons avec un point étoile non relié rigidement à la terre, un conducteur d'évacuation de surtension étant branché entre ce point d'étoile et le potentiel de la terre, et avec un commutateur (4) entre échelons et point étoile immergé dans le carter (1) du transformateur, commutateur dont la tête (6) mise au potentiel de la terre porte un cylindre isolant (7) faisant partie d'un réservoir d'huile dans lequel est logé le commutateur en charge (8), ce commutateur en charge (8) étant placé dans la partie inférieure du réservoir d'huile en réservant la distance d'isolation nécessaire par rapport à la tête (6) du commutateur d'échelons, transformateur à échelons caractérisé en ce qu'à l'intérieur du cylindre isolant (7), entre le commutateur en charge (8) et la tête (6) du commutateur d'échelons, est disposée une résistance (18) dépendant de la tension, qui est reliée électriquement, d'une part, à la tête (6) du commutateur d'échelons et, d'autre part, aux contacts (14) de point étoile du commutateur en charge (8).

2. Transformateur à échelons selon la revendication 1, caractérisé en ce que la résistance (18) dépendant de la tension, est constituée de plusieurs empilages de tablettes d'oxyde de zinc disposées parallèlement à l'axe (16) du cylindre isolant (7) dans des tubes en matière isolante (19) et pressées ensemble.

0 140 209